# EUROPÄISCHE PATENTSCHRIFT

(11) **EP 3 955 084 B1**
(45) Veröffentlichungstag und Bekanntmachung des Hinweises auf die Patenterteilung: **21.12.2022**
(21) Anmeldenummer: 21189634.5
(22) Anmeldetag: 04.08.2021
(51) Int. Cl.: G05D 16/20

(54) **SICHERHEITSEINRICHTUNG FÜR EINEN WANDLER**
SAFETY DEVICE FOR A CONVERTER
DISPOSITIF DE SÉCURITÉ POUR UN CONVERTISSEUR

(30) Priorität: 04.08.2020 DE 102020209799
(43) Veröffentlichungstag der Anmeldung: 16.02.2022
(73) Patentinhaber: SMS Group GmbH, 40237 Düsseldorf (DE)
(72) Erfinder: Naujock, Andreas, 46119 Oberhausen (DE); Ledergerber, Jörg, 40627 Düsseldorf (DE); Krasilnikov, Artemy, 47051 Duisburg (DE)
(74) Vertreter: Klüppel, Walter

(56) Entgegenhaltungen:
- WO-A1-2018/085746
- WO-A1-2019/238519
- US-A- 4 791 954
- US-A1- 2002 117 214

## Beschreibung

Die Erfindung betrifft eine Sicherheitseinrichtung für einen Wandler, der mit einer zugeführten elektrischen Versorgungsspannung und einem zugeführten Hilfsmedium betrieben wird zum Wandeln einer Eingangsgröße in eine Ausgangsgröße. Darüber hinaus betrifft die Erfindung einen Regelkreis zum Regeln des Druckes als Regelgröße eines Hauptmediums in einer Hauptmediumsleitung mit Hilfe eines selbstregelnden Druckregelventils. Die Sicherheitseinrichtung und der Wandler werden erfindungsgemäß zusammen als Sicherheitssystem bezeichnet. Die Erfindung betrifft darüber hinaus jeweils ein Verfahren zum Betreiben dieses Sicherheitssystems und des Regelkreises.

Die erfindungsgemäße Sicherheitseinrichtung ist grundsätzlich nicht auf bestimmte Anwendungsgebiete beschränkt. Sie kann vielmehr überall dort Verwendung finden, wo Wandler, die eine Eingangsgröße in eine Ausgangsgröße umwandeln, neben einer elektrischen Versorgungsspannung auch ein Hilfsmedium zu ihrem Betrieb benötigen. Ein besonders bevorzugtes Anwendungsgebiet für die erfindungsgemäße Sicherheitseinrichtung, für das beanspruchte Sicherheitssystem, für den beanspruchten Regelkreis und für die beanspruchten Verfahren ist die Stahlindustrie und insbesondere eine Gießanlage zum Gießen von Gießsträngen, Brammen oder Dünnbrammen. Diese Stranggussprodukte werden in einer Kokille kontinuierlich gegossen und anschließend in einer sogenannten Strangführungseinrichtung typischerweise aus der Vertikalen in die Horizontale umgelenkt und währenddessen gekühlt. Um das besagte Gießprodukt in der Anlage bedarfsgerecht kühlen zu können, werden sogenannte Kühlzonen vorgesehen. Diese Kühlzonen dienen dazu, das Produkt gemäß einer definierten Kühlstrategie in der Strangführungseinrichtung zu kühlen. Dazu werden bedarfsgerecht Kühlmedien direkt auf das Produkt gespritzt. Diese Kühlmedien sorgen für eine bedarfsgerechte Kühlung. Stranggießeinrichtungen können aus bis zu 20 Segmenten bestehen. Jedes Segment besteht aus einem Oberrahmen und einem Unterrahmen, die jeweils mechanisch miteinander gekoppelt sind. An der Unterseite des Oberahmens und an der Oberseite des Unterrahmens sind jeweils eine Mehrzahl von Strangführungsrollen drehbar gelagert. Die Rollen des Oberrahmens und die Rollen des Unterrahmens begrenzen einen Führungskanal für das frisch gegossene Produkt. Pro Segmentrahmen (Ober- oder Unterrahmen) können jeweils zwischen 2 bis 17 Strangführungsrollen vorgesehen sein. Bis zu 20 dieser Segmente können in einer Stranggießanlage hintereinander, d. h. in Gießrichtung hintereinander angeordnet sein, um einen Führungskanal für das frisch gegossene Stranggussprodukt aufzuspannen. In einer Stranggießanlage können für verschiedene Bereich, d. h. auch für einzelne Segmente, ein oder mehrere Kühlmedien-Regelkreise vorgesehen sein, die sich wiederum Kühlzonen unterordnen. Diese Kühlzonen können sich auf ein Segment beschränken oder sich auch über mehrere Segmente erstrecken. Auch besteht die Möglichkeit, dass nur Teile eines Segmentes Bestandteil einer Kühlzone sind. Die Kühlzonen selber können in Gießrichtung und/oder in Breitenrichtung mehrfach unterteilt sein (breitenabhängige Kühlung). Den einzelnen Teilungen sind dann typicherweise einzelne Kühlmedien-Regelkreise zugeordnet.

Zurzeit werden zur Regelung dieser Kühlmedien Standard-Regelorgane, nachfolgend auch Wandler genannt, wie z. B. Regelventile mit Hub- oder Dreheinrichtungen genutzt. Allen Wandlern gemeinsam ist, dass ihnen über ein Automatisierungssystem eine Stellgröße zugeführt wird, nach deren Maßgabe sie jeweils in eine bestimmte Hub- oder Drehstellung, d. h. einen bestimmten Öffnungsgrad eingestellt werden. Durch die Veränderung der von der Automatisierung beigebrachten Stellgröße bzw. den dadurch repräsentierten Öffnungsgrad kann bei dem jeweils geregelten Medium, z. B. Kühlwasser, z. B. ein bestimmter Soll-Volumenstrom eingestellt werden. Das Automatisierungssystem ermittelt die von ihm ausgegebene Stellgröße für den Wandler mit Hilfe eines internen Reglers nach Maßgabe einer zuvor intern ermittelten Regelabweichung, d. h. der ermittelten Differenz zwischen einer vorgegebenen Soll-Größe und einer gemessenen Ist-Größe. Der Regelkreis wird auf diese Weise geschlossen.

Allen bekannten Wandlern gemeinsam ist die Tatsache, dass sie für ihren Betrieb neben der elektrischen Versorgungsspannung ein Hilfsmedium als Energielieferant benötigen, um die jeweils geforderten Stellungen bzw. Öffnungsgrade als vorgegebene Sollwerte bei dem nachgelagerten Regelventil einstellen zu können. Bei den Hilfsmedien kann es sich um ein pneumatisches, elektrisches oder ein hydraulisches Hilfsmedium handeln. Sollten diese Hilfsmedien ausfallen, so ist ein gezieltes Anfahren von bestimmten Stellungen nicht mehr möglich, da die besagten Wandler ohne diese Hilfsmedien nicht mehr bewegt werden können, allerdings kann bei Standard-Wandlern über im Stellantrieb eingebaute Federn, bei dem Ausfall der Hilfsmedien, eine vordefinierte Endlage des Regelventils definiert werden, siehe z.B. WO2019/238519 A1.

Der Erfindung liegt die Aufgabe zugrunde, eine alternative Sicherheitseinrichtung für einen Wandler, der mit einem Hilfsmedium betrieben wird, bereitzustellen, welche sicherstellt, dass der Wandler auch bei abfallendem Druck des Hilfsmediums in der Hilfsmediumsleitung noch in eine Sicherheitsstellung bewegt werden kann. Darüber hinaus besteht die Aufgabe der vorliegenden Erfindung darin, ein alternatives Sicherheitssystem sowie einen alternativen Regelkreis mit dem Sicherheitssystem bereitzustellen sowie alternative Verfahren zum Betreiben des Sicherheitssystems und des Regelkreises anzugeben.

Diese Aufgabe wird bezüglich der Sicherheitseinrichtung durch den Gegenstand des Patentanspruchs 1 gelöst. In der beanspruchten Sicherheitseinrichtung ist eine Druckvergleichseinrichtung vorgesehen zum Feststellen, ob der Ist-Druck des Hilfsmediums in der Hilfsmediumsleitung, stromaufwärts eines ersten Rückschlagventils, einen vorgegebenen Betriebsdruck-Schwellenwert für das Hilfsmedium unterschreitet und falls ja, ist eine Steuereinrichtung vorgesehen zum Abschalten der Versorgungsspannung des Wandlers und zum Öffnen einer Ventileinrichtung innerhalb der Sicherheitseinrichtung zum Versorgen des Wandlers mit dem Hilfsmedium aus einem Pufferspeicher, das unter dem vorgegebenen bzw. erforderlichen Betriebsdruck für den Wandler steht.

Auf diese Weise wird erfindungsgemäß sichergestellt, dass der Wandler auch bei einem Abfall des Betriebsdruckes in einem Abschnitt der Hilfsmediumsleitung stromaufwärts des ersten Rückschlagventils noch in eine Sicherheitsstellung, im vorliegenden Fall auf eine Sicherheitsstellung "Auf" eingestellt werden kann.

Ausführungsbeispiele der beanspruchten Sicherheitseinrichtung sind Gegenstand der abhängigen Ansprüche 2 und 3.

Erfindungsgemäß wird die Kombination aus der besagten Sicherheitseinrichtung mit dem besagten Wandler als Sicherheitssystem bezeichnet und als solches in dem unabhängigen Anspruch 4 beansprucht. Anspruch 6 beansprucht einen Regelkreis zum Regeln einer Regelgröße, insbesondere des Druckes eines Hauptmediums in einer Hauptmediumsleitung, wobei der Regelkreis zunächst einen Druckregelkreis aufweist, der im Wesentlichen durch ein selbstregelndes Druckregelventil mit einem Drosselorgan realisiert ist. Der beanspruchte Regelkreis ist dadurch gekennzeichnet, dass er das erfindungsgemäße Sicherheitssystem, d. h. die erfindungsgemäße Sicherheitsreinrichtung mit dem Wandler aufweist, welches bei dem beanspruchten Regelkreis dafür vorgesehen ist, am Ausgang des Wandlers den Soll-Druck für das Hauptmedium für das mindestens eine selbstregelnde Druckregelventil vorzugeben.

Gemäß einem ersten Ausführungsbeispiel kann der besagte Druckregelkreis mit einem Volumenstromregelkreis überlagert sein. In diesem Fall bildet der Wandler zusammen mit dem ihm nachgeschalteten selbstregelnden Druckregelventil des Druckregelkreises das Stellglied für den eigentlichen Volumenstrom-Regelkreis. Der Soll-Druck, den das selbstregelnde Druckregelventil an seinem Ausgang einstellen soll, wird in diesem Fall so vorgegeben, dass der Soll-Druck den gewünschten Soll-Volumenstrom für das Hauptmedium repräsentiert. Weitere Ausgestaltungen des beanspruchten Regelkreises sind Gegenstand der abhängigen Ansprüche 8 und 9.

Weiterhin wird die oben genannte Aufgabe der Erfindung durch ein Verfahren gemäß Anspruch 10 zum Betreiben eines Sicherheitssystems nach Anspruch 4 oder 5 gelöst. Vorteilhafte Ausgestaltungen des Verfahrens sind Gegenstand der abhängigen Ansprüche 11 und 12.

Schließlich ist die oben genannte Aufgabe der Erfindung durch das Verfahren gemäß den Ansprüchen 13 und 14 gelöst, welche den Betrieb des erfindungsgemäßen Regelkreises betrifft.

Vorteilhafterweise werden der weiterhin beanspruchte Regelkreis sowie die beanspruchten Verfahren zum Betreiben des Sicherheitssystems und des Regelkreises verwendet zum Regeln des Druckes von Kühlwasser als Hauptmedium in einer Sekundärkühlung einer Stranggießeinrichtung einer Gießanlage zum Herstellen von Gießprodukten in einem Stahlwerk.

Der Beschreibung sind insgesamt 8 Figuren beigefügt, wobei
- Figur 1: eine schematische Ansicht des erfindungsgemäßen Sicherheitssystems;
- Figur 2: eine schematische Ansicht des erfindungsgemäßen Druckregelkreises mit dem erfindungsgemäßen Sicherheitssystem;
- Figur 3: eine schematische Ansicht des erfindungsgemäßen Volumenstromregelkreises; und
- Figur 4-8: Verwendungen der erfindungsgemäßen Sicherheitseinrichtung bei einer Mehrzahl von Regelkreisen, insbesondere in einer Strangführungseinrichtung zeigt.

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet.

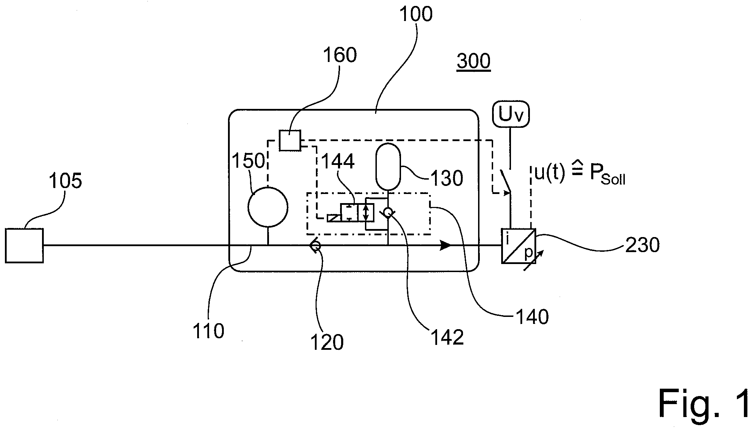

Figur 1 zeigt das erfindungsgemäße Sicherheitssystem aufweisend eine erfindungsgemäße Sicherheitseinrichtung 100 sowie einen der Sicherheitseinrichtung nachgeschalteten Wandler 230. Der Wandler wird mit einer zugeführten elektrischen Versorgungsspannung Uᵥ und mit einem zugeführten Hilfsmedium, das ihm über eine Hilfsmediumsleitung 110 aus einer Hilfsmediumsquelle 105 zugeführt wird, betrieben. Der Wandler ist ausgebildet zum Wandeln einer Eingangsgröße in eine Ausgangsgröße. Beispielsweise ist der Wandler 230 ausgebildet als Strom-/Druckwandler, d. h. er empfängt eine Eingangsgröße in Form eines Stromsignals und wandelt diese in ein entsprechendes pneumatisches oder fluides Drucksignal an seinem Ausgang um.

Der Wandler arbeitet nur zuverlässig, wenn gewährleistet ist, dass das ihm zugeführte Hilfsmedium unter einem vorgegebenen für den Wandler 230 notwendigen Betriebsdruck steht. Wenn der Betriebsdruck unter einen vorgegebenen Druck-Schwellenwert P_{Schwelle} Betrieb abfällt - aus welchen Gründen auch immer - arbeitet der Wandler nicht mehr zuverlässig oder er geht in eine eventuell unerwünschte Sperrstellung über. Um dies zu verhindern, ist die erfindungsgemäße Sicherheitseinrichtung 100 vor den Wandler 230 geschaltet.

Die Sicherheitseinrichtung 100 weist die besagte Hilfsmediumsleitung 110 auf zum Zuführen des Hilfsmediums von der Hilfsmediumsquelle 105 zu dem Wandler 230. In die Hilfsmediumsleitung 110 ist ein erstes Rückschlagventil 120 eingebaut zum Verhindern, dass das Hilfsmedium von dem Wandler 230 zu der Hilfsmediumsquelle 105 zurückfließt. Stromabwärts des ersten Rückschlagventils 120 ist innerhalb der erfindungsgemäßen Sicherheitseinrichtung 100 ein Pufferspeicher 130 für das Hilfsmedium abgezweigt. In die Abzweigung ist eine steuerbare Ventileinrichtung 140 geschaltet zum Verhindern, dass das Hilfsmedium unkontrolliert aus dem Pufferspeicher 130 in die Hilfsmediumsleitung und insbesondere zu dem Wandler 230 abfließt. Stromaufwärts des ersten Rückschlagventils 120 ist innerhalb der Sicherheitseinrichtung 100 eine Druckvergleichseinrichtung 150 vorgesehen zum Erfassen des jeweils aktuellen Ist-Druckes des Hilfsmediums innerhalb der Hilfsmediumsleitung 110. Die Sicherheitseinrichtung 100 weist schließlich eine Steuereinrichtung 160 auf zum Abschalten der Versorgungsspannung Uᵥ des Wandlers 230 und zum Öffnen der Ventileinrichtung 140 nach Maßgabe des von der Druckvergleichseinrichtung 150 gemessenen Druckes des Hilfsmediums in der Hilfsmediumsleitung 110.

Konkret sieht das erfindungsgemäße Verfahren zum Betreiben des Sicherheitssystems gemäß Figur 1 im Normalbetrieb folgende Schritte vor:
Der Pufferspeicher 130 und der Wandler 230 werden mit dem unter dem für den Wandler notwendigen Betriebsdruck stehenden Hilfsmedium aus der Hilfsmediumsleitung 110 bzw. der Hilfsmediumsquelle 105 gespeist, wobei das Speisen des Wandlers 230 über das erste Rückschlagventil 120 und die Speisung des Pufferspeichers über das erste Rückschlagventil und die steuerbare Ventilschaltung 140 erfolgen. Der Ist-Druck des Hilfsmediums wird stromaufwärts des ersten Rückschlagventils 120 mit Hilfe der besagten Druckvergleichseinrichtung 150 gemessen bzw. kontinuierlich überwacht. Sollte sich bei dieser Überwachung ein Abfall des Ist-Druckes des Hilfsmediums in der Hilfsmediumsleitung 110 unter einem vorgegebenen Betriebsdruck-Schwellenwert zeigen, so wechselt das Verfahren in einen Störungsbetrieb.

Dann wird mit Hilfe der Steuereinrichtung 160 die Versorgungsspannung Uᵥ des Wandlers abgeschaltet und die Ventileinrichtung 140, die dem Pufferspeicher 130 vorgeschaltet ist, geöffnet. Die steuerbare Ventileinrichtung 140 weist ein zwischen die Hilfsmediumsleitung und den Pufferspeicher geschaltetes zweites Rückschlagventil 142 mit Durchlassrichtung zu dem Pufferspeicher 130 hin und ein zu dem zweiten Rückschlagventil 142 parallel geschaltetes und von der Steuereinrichtung 160 ansteuerbares Schaltventil 144 als steuerbaren Bypass zu dem zweiten Rückschlagventil 142 auf. Bei einem Öffnen der Ventileinrichtung 140 wird das besagte Schaltventil 144 von der Steuereinrichtung 160 derart angesteuert, dass es öffnet und insofern das parallelschaltete zweite Rückschlagventil fluid-technisch kurzschließt. Damit bildet das geöffnete Schaltventil 144 einen offenen Bypass zu dem zweiten Rückschlagventil 142. Bei dieser Schaltungskonstellation fließt dann das in dem Pufferspeicher 130 gespeicherte Hilfsmedium mit dem hinreichend großen Betriebsdruck über das Schaltventil 144 zu dem Wandler 230 und schaltet diesen, wie erfindungsgemäß gewünscht, in eine Stellung "Auf".

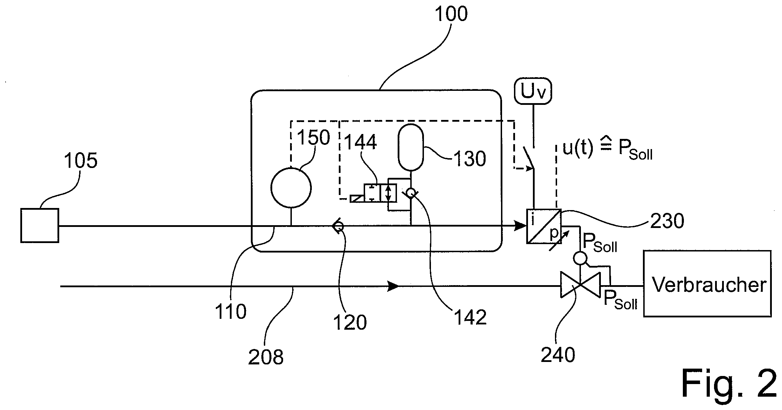

Figur 2 zeigt eine bevorzugte Anwendung für das zuvor beschriebene Sicherheitssystem, nämlich in einem Druckregelkreis. Der Wandler 230 ist dann als Druckwandler ausgebildet. Dann bedeutet die Stellung "Auf", dass er an seinem Ausgang einen maximalen pneumatischen oder fluiden Ausgangsdruck erzeugt und an ein nachgeschaltetes Druckregelventil 240 als Soll-Druck vorgibt. Die maximale Druckvorgabe bedeutet maximale Öffnung des besagten Druckregelventils 240 für ein Hauptmedium.

Erfindungsgemäß ist das verwendete Druckregelventil 240 selbstregelnd ausgebildet, d. h. die für einen Regelkreis typische Rückkopplung und der ebenfalls typische Soll-Ist-Wertvergleich erfolgen intern innerhalb des selbstregelnden Druckregelventils 240. Figur 2 zeigt deshalb nicht die für einen Regelkreis typische Rückkopplung einer Messgröße. Auch bei veränderlichem Ist-Druck im Hauptmedium ist das Druckregelventil 240 bestrebt, den vorgegebenen Soll-Druck für das Hauptmedium an seinem Ausgang zu halten bzw. auszuregeln.

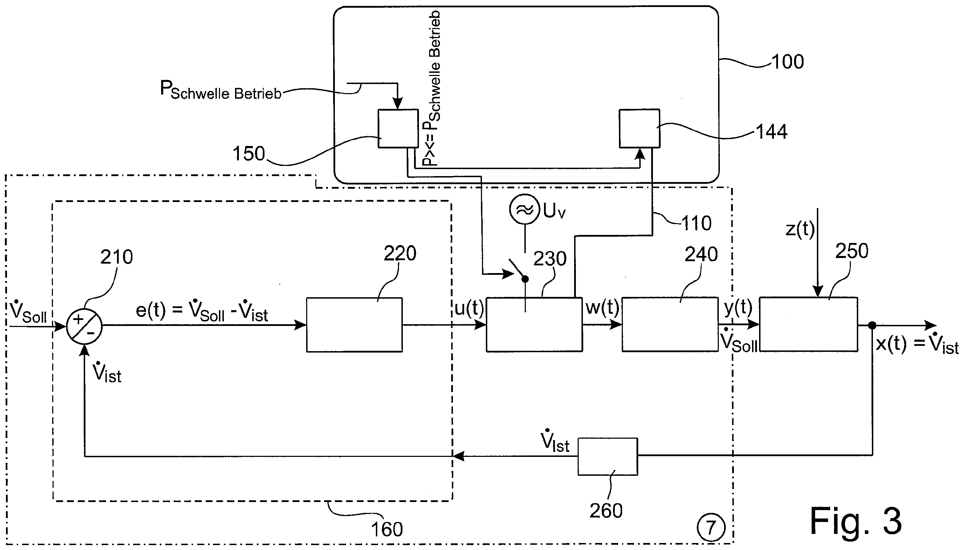

Erfindungsgemäß kann der Regelkreis gemäß Figur 2 jedoch auch mit einem überlagerten Volumenstromregelkreis betrieben werden. Der Volumenstromregelkreis ist dann dem besagten Druckregelkreis überlagert. Wie Figur 3 erkennen lässt, fungieren dann der Wandler 230 und das selbstregelnde Druckregelventil 240 des Druckregelkreises als Stellglied zum Regeln des Ist-Volumenstroms des Hauptmediums auf einen vorgegebenen Soll-Volumenstrom durch geeignete Variation der dem Wandler 230 zugeführten Stellgröße u(t). Eine übergeordnete Steuereinrichtung 160, typischerweise auch Automatisierung genannt, übernimmt in diesem Fall Teile des besagten Volumenstromregelkreises. Konkret empfängt die Automatisierung, in Figur 3 als gestrichelter Kasten dargestellt, den aktuellen Ist-Volumenstrom *V̇*_{Ist} von einer Volumenstrommesseinrichtung 260 und vergleicht diesen gemessenen Ist-Volumenstrom in einer Berechnungseinrichtung 210 mit einem vorgegebenen Soll-Volumenstrom *V̇*_{Soll}. Der Vergleich innerhalb der Automatisierung besteht insbesondere in der Ermittlung einer Volumenstrom-Regelabweichung e(t) als Differenz zwischen dem Soll- und dem Ist-Volumenstrom. Diese Volumenstrom-Regeldifferenz geht als Eingangsgröße auf einen Regler 220, vorzugsweise innerhalb der Automatisierung, welcher diese Regelabweichung in eine geeignete Steuergröße u(t) für das Stellglied des Volumenstrom-Regelkreises, d. h. insbesondere für den Wandler 230, umwandelt. Sofern als Regelventil 240 nach wie vor das besagte Druckregelventil verwendet wird, so muss dieses den erforderlichen Soll-Druck als pneumatisches oder fluides Drucksignal w(t) von dem Wandler 230 empfangen. Die Stellgröße u(t) und auch die von dem Wandler 230 generierte Stellgröße w(t) mögen zwar einen Solldruck für den Druckregler 240 repräsentieren; bei der Volumenstrom-Regelung repräsentieren sie gleichzeitig jedoch auch einen Soll-Volumenstrom für das Hauptmedium. Auf diese Weise ist dann der Volumenstrom-Regelkreis, wie in Figur 3 gezeigt, geschlossen.

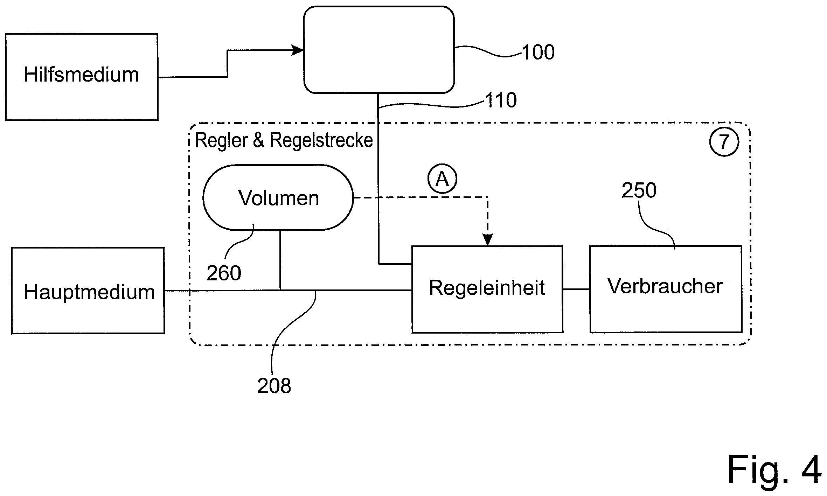

Gemäß einem bevorzugten Ausführungsbeispiel gemäß Figur 4 handelt es sich bei dem Verbraucher bzw. der Regelstrecke 250, wie gesagt, um einen geregelten Kühlwasserkreislauf, der zumindest einen Teil einer Kühlzone oder eine gesamte Kühlzone innerhalb einer Strangführungseinrichtung repräsentiert. Genauer gesagt symbolisiert die Wirklinie (A) die Volumenstromregelung für das (Sekundär-) Kühlwasser innerhalb der Strangführungseinrichtung und die Hilfsmediumsleitung 110 die Anbindung der erfindungsgemäßen Sicherheitseinrichtung 100 an die besagte Kühlwasserregelung. Die einzelnen Komponenten der Volumenstrom-Kühlwasserregelung sind als Gruppe (7) zusammengefasst. Die an der Volumenstromregelung beteiligten Komponenten sind in den Figuren 3 und 4 jeweils als Gruppe strichpunktiert eingerahmt.

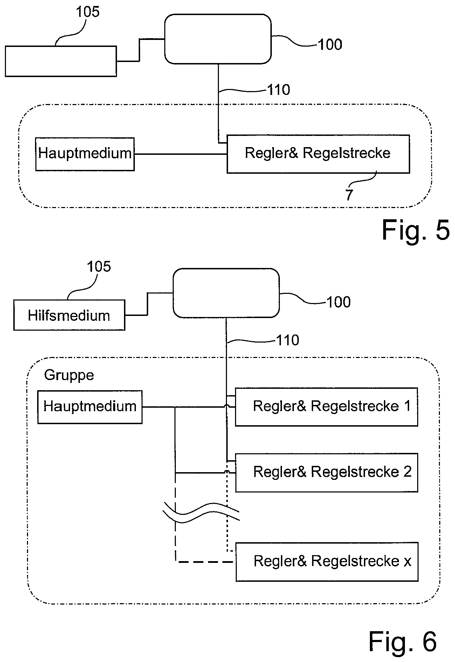

Figur 5 stellt gegenüber der Figur 4 eine weitere Abstraktion dar. Konkret ist die Kombination des Volumenstrommessgerätes, der Regeleinheit und des Verbrauchers bzw. der Regelstrecke 250 aus Figur 4 in Figur 5 in dem Block "Regler und Regelstrecke" dargestellt bzw. zusammengefasst.

In Figur 6 sind eine Mehrzahl der Blöcke "Regler & Regelstrecke" zu einer Gruppe zusammengefasst. Die einzelnen Regler und Regelstrecken können einer Kühlzone untergeordnet sein. Dabei wird das Hilfsmedium über eine bereichsorientierte Hilfsmediumsleitung 110 an die einzelnen Blöcke "Regler und Regelstrecke" geführt. Jedem Block "Regler und Regelstrecke" 1,2...x werden die erforderlichen Medien und Hilfsmedien über die erfindungsgemäße Sicherheitseinrichtung 100 zugeführt. Die einzelnen Blöcke "Regler und Regelstrecke" 1,2...x stellen gemäß Figur 6 eine Gruppe dar.

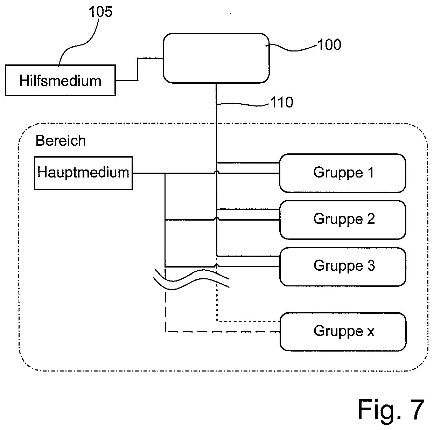

Figur 7 definiert einen Bereich als eine Mehrzahl von Gruppen von "Reglern und Regelstrecken", wie zuvor beschrieben. Die einzelnen Gruppen werden individuell von der erfindungsgemäßen Sicherheitseinrichtung 100 mit dem Hilfsmedium gespeist. Gemäß Figur 7 werden eine Mehrzahl von Gruppen zu einem Bereich zusammengefasst.

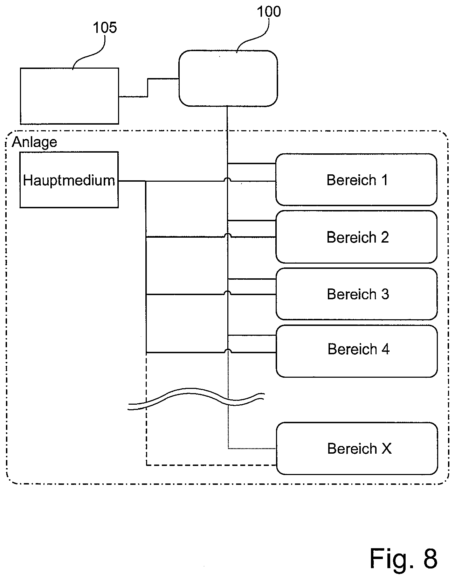

Gemäß Figur 8 können in einer Anlage eine Mehrzahl von Bereichen ebenfalls wiederum durch die erfindungsgemäße Sicherungseinrichtung 100 mit dem erfindungsgemäßen Hilfsmedium versorgt werden.

### Bezugszeichenliste

- 100: Sicherheitseinrichtung
- 105: Hilfsmediumsquelle
- 110: Hilfsmediumsleitung
- 120: erstes Rückschlagventil
- 130: Pufferspeicher
- 140: steuerbare Ventileinrichtung
- 142: zweites Rückschlagventil
- 144: ansteuerbares Schaltventil
- 150: Druckvergleichseinrichtung
- 160: Steuereinrichtung
- 208: Hauptmediumsleitung
- 210: Berechnungseinrichtung
- 220: Regler
- 230: Wandler
- 240: selbstregelndes Druckregelventil
- 250: Regelstrecke
- 260: Messeinrichtung für Volumenstrom des Hauptmediums
- 300: Sicherheitssystem

- e(t): Volumenstrom-Regeldifferenz
- P_{Schwelle Betrieb}: Betriebsdruck-Schwellenwert
- Uᵥ: elektrische Versorgungsspannung für den Wandler
- u(t): Stellgröße für Wandler
- w(t): Soll-Druck-Ausgangssignal des Wandlers
- *V̇*_{Ist} (t): vorgegebener Ist-Volumenstrom
- *V̇*_{Soll}: vorgegebener Soll-Volumenstrom
- A: Volumenregelkreis
- 7: Gruppen

## Patentansprüche

1. Sicherheitseinrichtung (100) für einen Wandler (230), der mit einer zugeführten elektrischen Versorgungsspannung (Uv) und einem zugeführten Hilfsmedium betrieben wird zum Wandeln einer Eingangsgröße in eine Ausgangsgröße, wobei die Sicherheitseinrichtung (100) aufweist:
eine Hilfsmediumsleitung (110) zum Zuführen des Hilfsmediums von einer Hilfsmediumsquelle (105) zu dem Wandler (230);
ein in die Hilfsmediumsleitung eingebautes erstes Rückschlagventil (120) zum Verhindern eines Rückflusses des Hilfsmediums von dem Wandler (230) zu der Hilfsmediumsquelle (105);
einen stromabwärts des ersten Rückschlagventils von der Hilfsmediumsleitung (110) abgezweigten Pufferspeicher (130) für das Hilfsmedium;
eine steuerbare Ventileinrichtung (140) zum Verhindern eines unkontrollierten Abflusses des Hilfsmediums aus dem Pufferspeicher (130);
eine vorzugsweise stromaufwärts des ersten Rückschlagventils (120) an die Hilfsmediumsleitung (110) für das Hilfsmedium angeschlossene Druckvergleichseinrichtung (150); und
eine Steuereinrichtung (160) zum Abschalten der Versorgungsspannung (Uᵥ) des Wandlers (230) und zum Öffnen der Ventileinrichtung (140) zum Versorgen des Wandlers mit dem Hilfsmedium, das unter einem vorgegebenen Betriebsdruck steht, aus dem Pufferspeicher (130), wenn die Druckvergleichseinrichtung (150) feststellt, dass der Ist-Druck des Hilfsmediums in der Hilfsmediumsleitung (110), stromaufwärts des ersten Rückschlagventils (120), einen vorgegebenen Betriebsdruckschwellenwert (P_{Schelle Betrieb}) für das Hilfsmedium unterschreitet.

2. Sicherheitseinrichtung (100) nach Anspruch 1,
**dadurch gekennzeichnet,**
**dass** die steuerbare Ventileinrichtung (140) aufweist:
ein zwischen die Hilfsmediumsleitung (110) und den Pufferspeicher (130) geschaltetes zweites Rückschlagventil (142) mit Durchlassrichtung zu dem Pufferspeicher hin; und
ein zu dem zweiten Rückschlagventil (142) parallel geschaltetes und von der Steuereinrichtung (160) ansteuerbares Schaltventil (144) als steuerbarer Bypass zu dem zweiten Rückschlagventil (142).

3. Sicherheitseinrichtung (100) nach einem der vorangegangenen Ansprüche,
**dadurch gekennzeichnet,**
**dass** die Druckvergleichseinrichtung (150) und die Steuereinrichtung (160) zusammen in Form eines Druckschalters realisiert sind.

4. Sicherheitssystem (300) aufweisend:
die Sicherheitseinrichtung (100) nach einem der vorangegangenen Ansprüche; und
den Wandler (230), der mit einer zugeführten elektrischen Versorgungsspannung (Uᵥ) und dem zugeführten Hilfsmedium betrieben wird zum Wandeln eines Stromsignals, welches einen Soll-Druck für ein Hauptmedium als Eingangsgröße in einen vorgegebenen Soll-Druck (P_{Soll}) als Ausgangsgröße;
wobei das Hilfsmedium, das unter einem vorgegebenen Betriebs-Druck steht, von der Sicherheitseinrichtung (100) aus dem Pufferspeicher (130) für den Wandler (230) bereitgestellt wird, wenn die Druckvergleichseinrichtung (150) feststellt, dass der Ist-Druck des Hilfsmediums in der Hilfsmediumsleitung stromaufwärts des ersten Rückschlagventils, den vorgegebenen Betriebsdruckschwellenwert (P_{Schwelle} Betrieb) für das Hilfsmedium unterschreitet.

5. Regelkreis zum Regeln einer Regelgröße eines Hauptmediums in einer Hauptmediumsleitung (208), aufweisend einen Druckregelkreis mit:
mindestens einem in die Hauptmediumsleitung (208) eingebauten selbstregelnden Druckregelventil (240) mit einem Drosselorgan zum eigenständigen Regeln des Ist-Drucks des Hauptmediums als der Regelgröße an seinem Ausgang auf einen vorgegebenen Soll-Druck (P_{Soll}) durch geeignete eigenständige Variation der Stellung des Drosselorgans; und
dem Sicherheitssystem (300) nach Anspruch 4 oder 5, wobei der Wandler (230) an seinem Ausgang den Soll-Druck für das Hauptmedium für das mindestens eine selbstregelnde Druckregelventil (240) vorgibt.

6. Regelkreis nach Anspruch 5,
weiterhin **gekennzeichnet durch**
mindestens einen dem Druckregelkreis überlagerten Volumenstromregelkreis mit dem Wandler (230) und dem selbstregelnden Druckregelventil (240) des Druckregelkreises als Stellglied zum Regeln des Ist-Volumenstroms des Hauptmediums auf einen vorgegebenen Soll-Volumenstrom **durch** geeignete Variation der dem Wandler (230) zugeführten Stellgröße (u(t)),
wobei die Stellgröße derart variierbar ist, dass der Soll-Druck, den der Wandler (230) im Ansprechen auf die Stellgröße (u(t)) an seinem Ausgang für das nachgeschaltete Druckregelventil (240) generiert, den gewünschten Soll-Volumenstrom für das Hauptmedium repräsentiert.

7. Regelkreis nach Anspruch 6,
**dadurch gekennzeichnet,**
**dass** der Volumenstromregelkreis neben dem besagten Stellglied weiterhin aufweist:
eine Messeinrichtung (260) zum Erfassen des Ist-Volumenstroms des Hauptmediums in der Hauptmediumsleitung (208);
eine Berechnungseinrichtung (210) zum Berechnen einer Volumenstrom-Regeldifferenz (e(t)) als Differenz zwischen dem vorgegebenen Soll-Volumenstrom (Vsu) für das Hauptmedium und dem erfassen Ist-Volumenstrom (*V̇*ₗₛₜ (t)) für das Hauptmedium; und
einen Regler (220) zum Berechnen der Stellgröße (u(t)) für den Wandler (230) im Ansprechen auf die empfangene Volumenstrom-Regeldifferenz (e(T)).

8. Regelkreis nach Anspruch 7,
**dadurch gekennzeichnet,**
**dass** der Wandler (230) in Form eines Strom-/Druck-Wandlers ausgebildet ist zum Empfangen der Stellgröße (u(t)) von dem Regler (220) in Form eines Stromsignals und zum Wandeln des Stromsignals in das Soll-Druck-Ausgangssignal (w(t)) für das nachgeschaltete Druckregelventil (240).

9. Regelkreis nach einem der Ansprüche 5 bis 8,
**dadurch gekennzeichnet,**
**dass** es sich bei dem Hauptmedium um Kühlwasser einer Sekundärkühlung in einer Strangführungseinrichtung einer Gießanlage handelt.

10. Verfahren zum Betreiben eines Sicherheitssystems nach Anspruch 4, im Normalbetrieb aufweisend folgende Schritte:
i) Speisen des Pufferspeichers (130) und des Wandlers (230) mit dem unter dem Betriebsdruck stehenden Hilfsmedium aus der Hilfsmediumsleitung, wobei das Speisen des Wandlers (230) über ein erstes Rückschlagventil (120) und die Speisung des Pufferspeichers (130) über das erste Rückschlagventil und die steuerbare Ventilschaltung (140) erfolgt;
ii) Überwachen des Ist-Druckes des Hilfsmediums stromaufwärts des ersten Rückschlagventils (120) dahingehend, ob der Ist-Druck den vorgegebenen Betriebsdruck-Schwellenwert (P_{Schwelle} Betrieb) unterschreitet; und Wiederholen der Schritte i) und ii) als Normalbetrieb, solange der Ist-Druck in dem Hilfsmedium den Betriebsdruck-Schwellenwert nicht unterschreitet; oder
Fahren eines Störungsbetriebs falls festgestellt wird, dass der Ist-Druck des Hilfsmediums in einem stromaufwärts des ersten Rückschlagventils gelegenen Abschnitt der Hilfsmediumsleitung den vorgegebenen Betriebsdruck-Schwellenwert (P_{Schwelle} Betrieb) unterschreitet, mit folgenden Schritten:
- Abschalten der elektrischen Versorgungspannung für den Wandler (230);
- Kurzschließen des zweiten Rückschlagventils (142) vor dem Pufferspeicher (130) mit der steuerbaren Ventileinrichtung (140), insbesondere durch Öffnen des ansteuerbaren Schaltventils (144); und
- Speisen und Betreiben des Wandlers (230) und des nachgeschalteten Druckregelventils (240) mit dem Hilfsmedium aus dem Pufferspeicher (130), wobei das Hilfsmedium unter dem Betriebsdruck steht, wodurch der Wandler (230) und das Druckregelventil (240) geöffnet werden.

11. Verfahren nach Anspruch 10,
**dadurch gekennzeichnet,**
**dass** sowohl im Normalbetrieb wie auch im Störungsbetrieb ein Rückfließen des Hilfsmediums mit dem Betriebsdruck aus dem Pufferspeicher (130) und/oder aus dem Wandler (230) in einen dem ersten Rückschlagventil vorgeschalteten Abschnitt der Hilfsmediumsleitung durch das erste Rückschlagventil (120) verhindert wird.

12. Verfahren nach einem der Ansprüche 8 oder 9,
**dadurch gekennzeichnet,**
**dass** es sich bei dem Hauptmedium um Kühlwasser einer Sekundärkühlung in einer Strangführungseinrichtung einer Gießanlage handelt.

13. Verfahren zum Betreiben des Regelkreises nach einem der Ansprüche 5 bis 9, aufweisend folgende Schritte:
Regeln des Ist-Drucks des Hauptmediums als der Regelgröße mit dem mindestens einen selbstregelnden Druckregelventil (240) auf einen vorgegebenen Soll-Druck durch geeignete eigenständige Variation der Stellung des Drosselorgans,
wobei der Soll-Druck für das Hauptmedium am Ausgang des Wandlers (230) für das mindestens eine selbstregelnde Druckregelventil (240) vorgegeben wird; und
wobei der Wandler (230) und eine vorgeschaltete Sicherheitseinrichtung (100) als Sicherheitssystem gemäß dem Verfahren nach einem der Ansprüche 10 bis 12 betrieben werden.

14. Verfahren nach Anspruch 13,
weiterhin **gekennzeichnet durch**
Regeln des Ist-Volumenstroms des Hauptmediums auf einen vorgegebenen Soll-Volumenstrom (*V̇*_{Soll}) **durch** geeignete Variation der dem Wandler (Wandler) zugeführten Stellgröße (u(t),
wobei die Stellgröße derart variiert wird, dass der Soll-Druck für das Hauptmedium, den der Wandler (230) im Ansprechen auf die Stellgröße an seinem Ausgang für das nachgeschaltete Druckregelventil generiert, den gewünschten Soll-Volumenstrom (*V̇*_{Soll}) für das Hauptmedium repräsentiert.

## Claims

1. Safety device (100) for a converter (230), which for conversion of an input variable into an output variable is operated by a supplied electrical supply voltage (Uᵥ) and a supplied auxiliary medium, wherein the safety device (100) comprises:
an auxiliary medium line (110) for supply of the auxiliary medium from an auxiliary medium source (105) to the converter (230);
a first non-return valve (120), which is incorporated in the auxiliary medium line, for preventing a return flow of the auxiliary medium from the converter (230) to the auxiliary medium source (105);
a buffer store (130), which is branched off from the auxiliary medium line (110) downstream of the first non-return valve, for the auxiliary medium;
a controllable valve device (140) for preventing an uncontrolled outflow of the auxiliary medium from the buffer store (130);
a pressure comparison device (150) which is connected with the auxiliary medium line (110) for the auxiliary medium preferably upstream of the first non-return valve (120); and a control device (160) for switching off the supply voltage (Uᵥ) of the converter (230) and for opening the valve device (140) for supply of the converter with the auxiliary medium, which is under a predetermined operating pressure, from the buffer store (130) when the pressure comparison device (150) establishes that the actual pressure of the auxiliary medium in the auxiliary medium line (110) upstream of the first non-return valve (120) falls short of a predetermined operating pressure threshold value (P_{threshold} operation) for the auxiliary medium.

2. Safety device (100) according to claim 1,
**characterised in that**
the controllable valve device (140) comprises:
a second non-return valve (142) which is connected between the auxiliary medium line (110) and the buffer store (130), with pass direction towards the buffer store; and
a switching valve (144), which is connected in parallel with the second non-return valve (142) and is activatable by the control device (160), as controllable bypass to the second non-return valve (142).

3. Safety device (100) according to one of the preceding claims,
**characterised in that**
the pressure comparison device (150) and the control device (160) are realised together in the form of a pressure switch.

4. Safety system (300) comprising:
the safety device (100) according to any one of the preceding claims; and
the converter (230), which is operated by a supplied electrical supply voltage (Uᵥ) and the supplied auxiliary medium, for converting a current signal, which is a target pressure for a main medium, as input variable into a predetermined target pressure (P_{target}) as output variable;
wherein the auxiliary medium, which is under a predetermined operating pressure, is provided by the safety device (100) from the buffer store (130) for the converter (230) when the pressure comparison device (150) establishes that the actual pressure of the auxiliary medium in the auxiliary medium line upstream of the first non-return valve falls short of the predetermined operating pressure threshold value (P_{threshold} operation) for the auxiliary medium.

5. Regulating circuit for regulating a regulating variable of a main medium in a main medium line (208), comprising a pressure regulating circuit with:
at least one self-regulating pressure regulating valve (240), which is incorporated in the main medium line (208), with a throttle element for independent regulation of the actual pressure of the main medium as the regulating variable at its output to a predetermined target pressure (P_{target}) through suitable independent variation of the setting of the throttle element; and
the safety system (300) according to claim 4 or 5, wherein the converter (230) presets at its output the target pressure for the main medium for the at least one self-regulating pressure regulating valve (240).

6. Regulating circuit according to claim 5,
further **characterised by**
at least one volume flow regulating circuit, which is superimposed on the pressure regulating circuit, with the converter (230) and the self-regulating pressure regulating valve (240) of the pressure regulating circuit as setting element for regulating the actual volume flow of the main medium to a predetermined target volume flow through suitable variation of the setting variable (u(t)) supplied to the converter (230),
wherein the setting variable is variable in such a way that the target pressure which the converter (230) generates in response to the setting variable (u(t)) at its output for the downstream pressure regulating valve (240) represents the desired target volume flow for the main medium.

7. Regulating circuit according to claim 6,
**characterised in that**
the volume flow regulating circuit apart from the said setting element further comprises:
a measuring device (260) for detecting the actual volume flow of the main medium in the main medium line (208);
a computing device (210) for computing a volume flow regulating difference (e(t)) as a difference between the predetermined target volume flow (Vsu) for the main medium and the detected actual volume flow (*V̇*_{actual}(t)) for the main medium; and
a regulator (220) for calculating the setting variable (u(t)) for the converter (230) in response to the received volume flow regulating difference (e(T)).

8. Regulating circuit according to claim 7,
**characterised in that**
the converter (230) is configured in the form of a current/pressure converter for reception of the setting variable (u(t)) from the regulator (220) in the form of a current signal and for conversion of the current signal into the target pressure output signal (w(t)) for the downstream pressure regulating valve (240).

9. Regulating circuit according to any one of claims 5 to 8,
**characterised in that**
the main medium is cooling water of a secondary cooling means in a strip guide device of a casting plant.

10. Method of operating a safety system according to claim 4, in normal operation comprising the following steps:
i) supplying the buffer store (130) and the converter (230) with the auxiliary medium, which stands under the operating pressure, from the auxiliary medium line, wherein the supply of the converter (230) takes place by way of a first non-return valve (120) and the supply of the buffer store (130) takes place by way of the first non-return valve and the controllable valve circuit (140);
ii) monitoring the actual pressure of the auxiliary medium upstream of the first non-return valve (120) with regard to whether the actual pressure falls short of the predetermined operating pressure target value (P_{threshold operation}); and
repeating the steps i) and ii) as normal operation as long as the actual pressure in the auxiliary medium does not fall short of the operating pressure threshold value;
or
conducting a disturbance operation if it is established that the actual pressure of the auxiliary medium in a section, which is upstream of the first non-return valve, of the auxiliary medium line falls short of the predetermined operating pressure threshold value (P_{threshold operation}), by the following steps:
- switching off the electrical supply voltage for the converter (230);
- short-circuiting the second non-return valve (142) in front of the buffer store (130) by the controllable valve device (140), in particular by opening the activatable switching valve (144); and
- supplying and operating the converter (230) and the downstream pressure regulating valve (240) with the auxiliary medium from the buffer store (130), wherein the auxiliary medium stands under the operating pressure, whereby the converter (230) and the pressure regulating valve (240) are opened.

11. Method according to claim 10,
**characterised in that**
not only in normal operation, but also in disturbance operation a return flow of the auxiliary medium at the operating pressure from the buffer store (130) and/or from the converter (230) into a section, which is upstream of the first non-return valve, of the auxiliary medium line is prevented by the first non-return valve (120).

12. Method according to one of claims 8 and 9,
**characterised in that**
the main medium is cooling water of a secondary cooling means in a strip guide device of a casting plant.

13. Method of operating the regulating circuit according to any one of claims 5 to 9, comprising the following steps:
regulating the actual pressure of the main medium as the regulating variable by the at least one self-regulating pressure regulating valve (240) to a predetermined target pressure by suitable independent variation of the setting of the throttle element,
wherein the target pressure for the main medium is predetermined at the output of the converter (230) for the at least one self-regulating pressure regulating valve (240); and
wherein the converter (230) and an upstream safety device (100) are operated as a safety system in accordance with the method according to any one of claims 10 to 12.

14. Method according to claim 13,
further **characterised by**
regulating the actual volume flow of the main medium to a predetermined target volume flow (*V̇*_{target}) by suitable variation of the setting variable (u(t)) supplied to the converter (converter),
wherein the setting variable is varied in such a way that the target pressure for the main medium which the converter (230) generates in response to the setting variable at its output for the downstream pressure regulating valve, represents the desired target volume flow (*V̇*_{target}) for the main medium.

## Revendications

1. Dispositif de sécurité (100) destiné à un transformateur (230) qui est mis en exploitation avec une tension d'alimentation électrique acheminée (Uᵥ) et avec un milieu auxiliaire acheminé, à des fins de conversion d'une grandeur d'entrée en une grandeur de sortie ; dans lequel le dispositif de sécurité (100) présente :
un conduit destiné à un milieu auxiliaire (110) à des fins d'acheminement du milieu auxiliaire à partir d'une source de milieu auxiliaire (105) jusqu'au transformateur (230) :
un premier clapet de non-retour (120) incorporé dans le conduit destiné à un milieu auxiliaire, qui est destiné à empêcher un reflux du milieu auxiliaire à partir du transformateur (230) jusqu'à la source de milieu auxiliaire (105) ;
un tampon de stockage (130) qui bifurque à partir du conduit destiné à un milieu auxiliaire (110) en aval du premier clapet de non-retour ;
un dispositif sous la forme d'une soupape (140) qui peut être commandé, destiné à empêcher un écoulement incontrôlé à partir du tampon de stockage (130) ;
un dispositif d'équilibrage de la pression (150), raccordé de préférence en amont par rapport au premier clapet de non-retour, (120) au conduit (110) qui est destiné au milieu auxiliaire ; et
un dispositif de commande (160) destiné à la mise hors circuit de la tension d'alimentation (Uᵥ) du transformateur (230) et à l'ouverture du dispositif sous la forme d'une soupape (140) à des fins d'alimentation du transformateur avec le milieu auxiliaire dans lequel règne une pression inférieure à une pression de mise en exploitation qui a été déterminée au préalable, à partir du tampon de stockage (130) lorsque le dispositif d'équilibrage de la pression (150) détermine que la pression réelle du milieu auxiliaire dans le conduit destiné à un milieu auxiliaire (110), en amont par rapport au premier clapet antiretour (120), dépasse vers le bas une valeur seuil de pression de la mise en exploitation qui a été déterminée au préalable (P_{seuil mise en exploitation}) pour le milieu auxiliaire.

2. Dispositif de sécurité (100) conformément à la revendication 1, **caractérisé**
**en ce que** le dispositif sous la forme d'une soupape (140) qui peut être commandé, présente :
un deuxième clapet de non-retour (142) qui est monté entre le conduit destiné à un milieu auxiliaire (110) et le tampon de stockage (130) dont le sens de conduction est orienté en direction du tampon de stockage ; et
une soupape de commutation (144) montée en parallèle au deuxième clapet de non-retour (142) et qui peut être commandée à partir du dispositif de commande (160), sous la forme d'une dérivation qui peut être commandée par rapport au deuxième clapet de non-retour (142).

3. Dispositif de sécurité (100) conformément à l'une quelconque des revendications précédentes, **caractérisé**
**en ce que** le dispositif d'équilibrage de la pression (150) et le dispositif de commande (160) sont réalisés de manière conjointe sous la forme d'un commutateur de pression.

4. Système de sécurité (300) qui présente :
le dispositif de sécurité (100) conformément à l'une quelconque des revendications précédentes ; et
le transformateur (230), qui est mis en exploitation avec une tension d'alimentation électrique acheminée (Uᵥ) et avec le milieu auxiliaire acheminé, à des fins de conversion d'un signal de courant, qui convertit une pression de consigne pour un milieu principal, à titre de grandeur d'entrée, en une pression de consigne (P_{deconsigne}) qui a été déterminée au préalable, à titre de grandeur de sortie ;
dans lequel le milieu auxiliaire, dans lequel règne une pression de mise en exploitation qui a été déterminée au préalable, est mis à la disposition du transformateur (230) par le dispositif de sécurité (100) à partir du tampon de stockage (130), lorsque le dispositif d'équilibrage de la pression (150) détermine que la pression réelle du milieu auxiliaire dans le conduit destiné à un milieu auxiliaire, en amont par rapport au premier clapet de non-retour, dépasse vers le bas la valeur seuil de la pression de mise en exploitation (Pₛₑᵤᵢₗ mise en exploitation) qui a été déterminée au préalable, pour le milieu auxiliaire.

5. Circuit de réglage destiné au réglage d'une valeur de réglage d'un milieu principal dans un conduit destiné à un milieu principal (208), qui présente un circuit de réglage de la pression qui comprend : au moins une soupape de réglage de la pression (240) qui se règle de manière automatique, incorporée dans le conduit destiné à un milieu principal (208), qui comprend un organe d'étranglement destiné au réglage autonome de la pression réelle du milieu principal, sous la forme de la valeur de réglage, à sa sortie, à une valeur de consigne (P_{de consigne}) qui a été déterminée au préalable, par l'intermédiaire d'une variation autonome appropriée de la position de l'organe d'étranglement ; et
le système de sécurité (300) conformément à la revendication 4 ou 5 ; dans lequel le transformateur (230), à sa sortie, détermine au préalable la pression de consigne pour le milieu principal pour ladite au moins une soupape de réglage de la pression (240) qui se règle de manière automatique.

6. Circuit de réglage conformément à la revendication 5,
**caractérisé en outre**
**par** au moins un circuit de réglage du débit superposé au circuit de réglage de la pression, qui comprend le transformateur (230) et la soupape de réglage de la pression (240) du circuit de réglage de la pression, qui se règle de manière automatique, à titre d'organe de réglage pour le réglage du débit réel du milieu principal à un débit de consigne qui a été déterminé au préalable, par l'intermédiaire d'une variation appropriée de la valeur de réglage (u(t)) qui a été acheminée au transformateur (230) ;
dans lequel on peut faire varier la valeur de réglage d'une manière telle que la pression de consigne que génère le transformateur (230) en réponse à la valeur de réglage (u(t)) à sa sortie pour la soupape de réglage de la pression (240) qui est montée à la suite, représente le débit de consigne que l'on souhaite pour le milieu principal.

7. Circuit de réglage conformément à la revendication 6,
**caractérisé**
**en ce que** le circuit de réglage du débit, à côté de l'organe de réglage en question, présente en outre :
un dispositif de mesure (260) qui est destiné à enregistrer le débit réel du milieu principal dans le conduit destiné à un milieu principal (208) ;
un dispositif de calcul (210) qui est destiné à calculer une différence de réglage du débit (e(t)) sous la forme d'une différence entre le débit de consigne (Vsu) pour le milieu principal et le débit enregistré (*V̇*_{réel}(t)) pour le milieu principal ; et
un dispositif de réglage (220) qui est destiné à calculer la valeur de réglage (u(t)) pour le convertisseur (230) en réponse à la différence de réglage du débit (e(T)) qui a été reçue.

8. Circuit de réglage conformément à la revendication 7,
**caractérisé**
**en ce que** le transformateur (230) est réalisé sous la forme d'un transformateur courant/pression à des fins de réception de la valeur de réglage (u(t)) à partir du dispositif de réglage (220) sous la forme d'un signal de courant et à des fins de transformation du signal de courant en signal de sortie de pression de consigne (w(t)) pour la soupape de réglage de la pression (240) qui est montée à la suite.

9. Circuit de réglage conformément à l'une quelconque des revendications 5 à 8,
**caractérisé**
**en ce que**, en ce qui concerne le milieu principal, il s'agit d'eau de refroidissement d'un refroidissement secondaire dans un dispositif de guidage de barre d'une installation de coulée continue.

10. Procédé destiné au mise en exploitation d'un système de sécurité conformément à la revendication 4, dans le mise en exploitation normale, qui présente les étapes suivantes dans lesquelles :
i) on alimente le tampon de stockage (130) et le transformateur (230) avec le milieu auxiliaire dans lequel règne la pression de mise en exploitation, à partir du conduit destiné à un milieu auxiliaire ;
dans lequel l'alimentation du transformateur (230) a lieu par l'intermédiaire d'un premier clapet de non-retour (120) et l'alimentation du tampon de stockage (130) a lieu par l'intermédiaire du premier clapet de non-retour et du commutateur de soupape (140) qui peut être commandé ;
ii) on surveille la pression réelle du milieu auxiliaire en amont du premier clapet antiretour (120) en vue de savoir si la pression réelle dépasse vers le bas la valeur seuil de la pression de mise en exploitation (Pₛₑᵤᵢₗ mise en exploitation) qui a été déterminée au préalable ; et
on répète les étapes 1) et ii) à titre de mise en exploitation normale, pour autant que la pression réelle qui règne dans le milieu auxiliaire ne dépasse pas vers le bas la valeur seuil de la pression de mise en exploitation ;
ou
on procède à une mise en exploitation en cas de dysfonctionnement lorsque l'on constate que la pression réelle du milieu auxiliaire dans un tronçon du conduit destiné à un milieu auxiliaire, qui est situé en amont par rapport au premier clapet de non-retour, dépasse vers le bas la valeur seuil de la pression de mise en exploitation (P_{seuil mise en exploitation}) qui a été déterminée au préalable, en passant par les étapes suivantes, à savoir :
- la mise hors circuit de la tension d'alimentation électrique pour le transformateur (230) ;
- la mise en court-circuit du deuxième clapet de non-retour (142) avant le tampon de stockage (130) avec le dispositif sous la forme d'une soupape (140) qui peut être commandé, en particulier par l'intermédiaire d'une ouverture de la soupape de commutation qui peut être excitée (144) ; et
- l'alimentation et la mise en exploitation du transformateur (230) et de la soupape de réglage de la pression (240) qui est montée à la suite, avec le milieu auxiliaire, à partir du tampon de stockage (130) ; dans lequel la pression qui règne dans le milieu auxiliaire est inférieure à la pression de mise en exploitation, ce qui donne lieu à l'ouverture du transformateur (230) et la soupape de réglage de la pression (240).

11. Procédé conformément à la revendication 10,
**caractérisé**
**en ce que**, aussi bien dans la mise en exploitation normale que dans la mise en exploitation en cas de dysfonctionnement, par l'intermédiaire du premier clapet de non-retour (120), on empêche un reflux du milieu auxiliaire, dans lequel règne la pression de mise en exploitation, à partir du tampon de stockage (130) et/ou à partir du transformateur (230) dans un tronçon du conduit destiné à un milieu auxiliaire, qui est disposé en amont par rapport au premier clapet de non-retour,

12. Procédé conformément à l'une quelconque des revendications 8 ou 9,
**caractérisé**
**en ce que**, en ce qui concerne le milieu principal, il s'agit d'eau de refroidissement d'un refroidissement secondaire dans un dispositif de guidage de barre d'une installation de coulée continue.

13. Procédé destiné à la mise en exploitation du circuit de réglage conformément à l'une quelconque des revendications 5 à 9, qui présente les étapes suivantes dans lesquelles :
on règle la pression réelle du milieu principal, sous la forme de la valeur de réglage, avec ladite au moins une soupape autonome de réglage de la pression (240) qui se règle de manière automatique, à une pression de consigne qui a été déterminée au préalable, par l'intermédiaire d'une variation autonome appropriée de la position de l'organe d'étranglement ;
dans lequel on détermine au préalable la pression de consigne pour le milieu principal à la sortie du transformateur (230) pour ladite au moins une soupape de réglage de la pression (240), qui se règle de manière automatique ; et
dans lequel le transformateur (230) et un dispositif de sécurité (100) monté en amont sont mis en exploitation sous la forme d'un système de sécurité en conformité avec le procédé conformément à l'une quelconque des revendications 10 à 12.

14. Procédé conformément à la revendication 13,
qui est en outre **caractérisé par** le fait de :
régler le débit réel du milieu principal à un débit de consigne (*V̇*_{de} consigne) qui a été déterminé au préalable par l'intermédiaire d'une variation appropriée de la valeur de réglage (u(t)) qui a été acheminée au transformateur (transformateur) ;
dans lequel on fait varier la valeur de réglage d'une manière telle que la pression de consigne pour le milieu principal, que génère le transformateur (230) en réponse à la valeur de réglage à sa sortie pour la soupape de réglage de la pression qui est montée à la suite, représente le débit de consigne (*V̇*_{de} consigne) que l'on souhaite pour le milieu principal.
